(19) Europäisches Patentamt / European Patent Office / Office européen des brevets

(11) **EP 2 246 854 A1**

(12) **EUROPEAN PATENT APPLICATION**

(43) Date of publication:
**03.11.2010 Bulletin 2010/44**

(51) Int Cl.:
*G11B 7/007* (2006.01)     *G11B 7/013* (2006.01)

(21) Application number: **09305364.3**

(22) Date of filing: **28.04.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **Thomson Licensing**
**92130 Issy-les-Moulineaux (FR)**

(72) Inventors:
• **Pilard, Gael**
  **78087 Mönchweiler (DE)**

• **Hoelzemann, Herbert**
  **78048 Villingen (DE)**
• **Kern, Alois**
  **78048 Villingen (DE)**

(74) Representative: **Arnold, Klaus-Peter**
**Deutsche Thomson OHG**
**European Patent Operations**
**Karl-Wiechert-Allee 74**
**30625 Hannover (DE)**

(54) **Optical storage medium comprising tracks with different modulation codes, and respective apparatus for reading of data**

(57) The optical storage medium comprises a substrate layer and a data layer disposed on the substrate layer, the data layer having a mark/space data structure being arranged in tracks (T1-T12), wherein marks and spaces of a first track are provided in accordance with a first modulation code (M1) and marks and spaces of a neighboring track are provided in accordance with a second modulation code (M2) being different from the first modulation code. The modulation code of marks and spaces of consecutive neighboring tracks is in particular alternating between the first and the second modulation code. An apparatus for reading data from the optical storage medium comprises a pickup for providing a high frequency signal, a tracking signal and a focus error signal, a tracking regulation and a data processing unit, which decodes the high frequency signal in accordance with the first or the second modulation code, in dependency of a respective track.

Fig. 2

**Description**

**TECHNICAL FIELD OF THE INVENTION**

The present invention relates to an optical storage medium, which comprises a substrate layer, a data layer with a mark/space structure, for example a read-only data layer with a pit/land structure, arranged in tracks on the substrate layer, and to a respective apparatus for reading of data. In a preferred embodiment, the optical storage medium comprises a non-linear layer with a super resolution structure for storing of data with high data density.

**BACKGROUND OF THE INVENTION**

Optical storage media are media in which data are stored in an optically readable manner by means of a pickup including a laser and an optical detector, for example a photodetector. The detector is used for detecting reflected light of the laser beam when reading data on the storage medium. In the meanwhile a large variety of optical storage media are known, which are operated with different laser wavelength, and which have different sizes for providing storage capacities from below one Gigabyte up to 50 Gigabyte (GB). The formats include read-only formats such as Audio CD and Video DVD, write-once optical media such as CD-R and DVD-R, DVD+R, as well as rewritable formats like CD-RW, DVD-RW and DVD+RW. Digital data are stored on these media along tracks in one or more layers of the media.

The storage medium with the highest data capacity is at present the Blu-ray disc (BD), which allows to store up to about 50 GB on a dual layer disc. For reading and writing of a Blu-ray disc a pickup with a laser wavelength of 405 nm and a numerical aperture of 0,85 is used. On the Blu-ray disc a track pitch of 320 nm and a mark length from 2T to 8T or 9T is implemented, where T is the channel bit length and wherein 2T corresponds with a minimum mark length of 138 - 160 nm.

The spatial resolution limit of optical instruments as described by the Abbe theory is about $\lambda/2NA$, which is 238nm for a Blu-ray type pickup having a laser wavelength $\lambda$=405nm and a numerical aperture NA=0,85. 238nm represents here the period of the smallest detectable mark frequency, period which is constituted of a pit and of a land of the same length. $\lambda/2NA$ is also called the diffraction limit and corresponds with the focus diameter of the laser beam on the optical disc. It corresponds finally to a theoretically smallest detectable mark (pit or land) of 119nm (in regard to a Blu-ray optic), or related to the wavelength and the numerical aperture, a smallest detectable mark (pit or land) of $\lambda/4NA$=119nm.

New optical storage media with a super-resolution structure offer the possibility to increase the data density of the optical storage medium by a factor of two to four in one dimension as compared with the Blu-ray disc. This is possible by including a nonlinear layer, which is placed above the data layer of the optical storage medium, and which significantly reduces the effective size of a light spot used for reading from or writing to the optical storage medium. The nonlinear layer can be understood as a mask layer because it is arranged above the data layer and for some specific materials only the high intensity center part of a laser beam can penetrate the mask layer. Further, semiconductor materials can be used as a nonlinear layer, e.g. InSb, which show a higher reflectivity in the center part of the focused laser beam, and which center reflectivity is dependent on the pit structure of the corresponding data layer. Therefore, the super-resolution effect allows to record and read data stored in marks of an optical disc, which have a size below the diffraction limit of $\lambda/4NA$ of a corresponding optical pickup.

The nonlinear layer is often called a super-resolution near-field structure (Super-RENS) layer because it is assumed that for some specific materials, the optical effect of reducing the effective spot size of the laser beam is based on a near-field interaction between the marks and spaces of the data layer and the nonlinear layer. Super-RENS optical discs comprising a super resolution near-field structure formed of a metal oxide, a polymer compound or a phase change layer comprising a GeSbTe or a AgInSbTe are known.

**SUMMARY OF THE INVENTION**

The optical storage medium comprises a substrate layer and a data layer disposed on the substrate layer, the data layer having a mark/space data structure being arranged in tracks, wherein marks and spaces of a first track are provided in accordance with a first modulation code and marks and spaces of a neighboring track are provided in accordance with a second modulation code being different from the first modulation code. The modulation code of marks and spaces of adjacent tracks is in particular alternating between the first and the second modulation code.

A track having marks and spaces in accordance with one of the two modulation codes therefore has a left and a right adjacent track in accordance with the other modulation code. The first modulation code provides for example a mark-kind track having marks representing a mark percentage of >60% of the mark-kind track and the second modulation code provides correspondingly a land-kind track having spaces representing a land percentage of >60% of the land-kind track.

The distance between two tracks having the same modulation code is therefore twice the track pitch between two adjacent tracks. The tracking regulation of an apparatus with a corresponding pickup for reading of the data of the optical storage medium therefore sees in radial direction of the storage medium a periodic structure of twice the track pitch between tracks of the same modulation code, and the track pitch between two adjacent tracks can be reduced therefore below the diffraction limit of $\lambda/2^*Na$ of the pickup in radial direction, by still providing a stable tracking of the pickup.

An apparatus for reading data from the optical storage medium comprises a pickup for providing a high frequency (HF) signal, a tracking signal and a focus error signal, a tracking regulation and a data processing unit, which decodes the HF signal in accordance with a first modulation code, when the main beam is positioned on a track comprising marks and spaces in accordance with a first modulation code and demodulates the HF signal in accordance with the second modulation code, when the main beam is positioned on a track comprising a mark/space data structure in accordance with the second modulation code.

For the tracking regulation, advantageously a three-beam tracking method is utilized by using a pickup providing a main beam and two satellite beams, the main beam being adjusted on a track of which data have to be read by the pickup, and the first satellite beam being adjusted for example to the left adjacent track and the second satellite beam to the right adjacent track, to generate a reliable and stable tracking signal.

The optical storage medium is in a preferred embodiment a read-only optical disc comprising pits and lands as marks and spaces, and the first modulation code provides tracks being dominated by pits and the second modulation code provides tracks being dominated by lands, or vice versa. The first modulation code provides advantageously tracks having a pit/land percentage of > 70% representing groove-kind tracks and the second modulation code provides advantageously tracks having a pit/land percentage of < 30% for providing land-kind tracks. Because of low-pass filtering of the tracking signal within the apparatus, the groove-kind tracks will be seen therefore by the tracking regulation as a continuous groove having a depth of 70% of a single pit, and the land-kind tracks will be seen as shallow grooves having a depth of 30% of the depth of a single pit.

The tracks in accordance with the first modulation code may be arranged as a first spiral on the optical disc, and the tracks in accordance with the second modulation code may be arranged as a second spiral on the optical disc, being interleaved with the first spiral. For reading of the data of the optical disc, the center beam moves advantageously along the pits and lands of the first spiral until the end of the first spiral, and switches then to the second spiral, for reading the data of the second spiral. This reduces track jumps between neighboring tracks to a small number or only to one, which allows a fast reading the data of the optical disc.

In another aspect of the invention, the optical storage medium comprises further a nonlinear layer with a super-resolution structure disposed on the data layer, between a cover layer and the data layer. The optical storage medium is designed for use with an apparatus comprising a pickup with a laser emitting light with a wavelength within a range of 400-430nm, and the track pitch between adjacent tracks is below 220nm. For example a track pitch of 160nm is used, which would increase the data density of the storage medium by a factor of two in comparison with a Blu-ray disc, which has a standard track pitch of 320nm. For a respective read-only optical storage medium, tracks in accordance with the first modulation code have in particular pits of large length, for example having only pits with a length being above the resolution limit of $\lambda/4^*NA$ of the pickup, and tracks in accordance with the second modulation code have in particular lands of large length, for example only lands with a length being above the resolution limit of $\lambda/4^*NA$.

BRIEF DESCRIPTION OF THE DRAWINGS

Preferred embodiments of the invention are explained now in more detail below by way of example with reference to schematic drawings, which show:

Fig. 1          a part of an optical storage medium having a layer stack with a super resolution layer in a cross-section,
Fig. 2          a small area of an optical disc showing marks and spaces of tracks,
Figs. 3a, 3b    track structures with tracks being represented by one or two spirals on an optical disc,
Fig. 4          an optical detector arrangement of a pickup for providing a three-beam tracking regulation, and
Fig. 5          an example for illustrating two symmetrical modulation codes.

DETAILED DESCRIPTION OF PREFERRED EMBODIMENTS

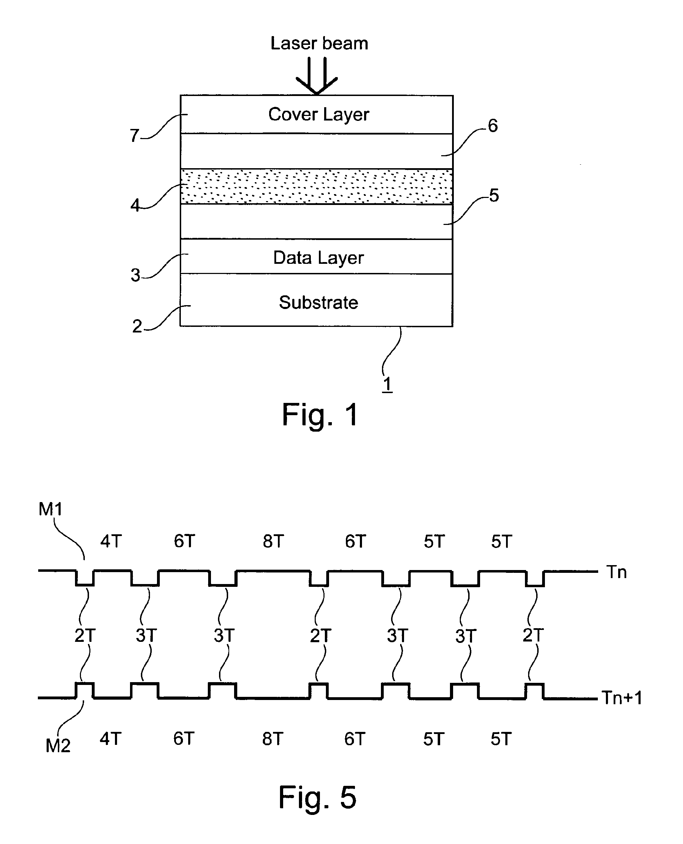

In Fig. 1 an optical storage medium 1 is shown in a cross-section in a simplified manner. The optical storage medium 1 is for example a read-only (ROM) optical disc. A data layer 3 is arranged on a substrate 2 of the optical storage medium 1, which may comprise a reflective metallic layer, for example an aluminum layer. The data layer 3 has a data structure consisting of marks and spaces arranged on essentially parallel tracks. In the case of a ROM disc, the marks and spaces consist of pits and lands, the pits being molded or embossed on the surface of substrate 2 representing the data layer 3, and the reflective metallic layer covers the data layer 3. On the data layer 3 a first dielectric layer 5 is arranged, on which a nonlinear layer 4 is disposed for providing the function of a mask layer for utilizing a super-resolution effect. The nonlinear layer 4 comprises in particular a super-resolution structure, e.g. a super-resolution near-field structure (Super-RENS). The optical storage medium 1 is for example an optical disc having a size similar to a DVDs, CDs and Blu-ray discs.

Above the nonlinear layer 4 a second dielectric layer 6 is disposed. As a further layer, a cover layer 7 is disposed on the second dielectric layer 5 as a protective layer. For reading the data of the data layer 3, a laser beam is applied in this embodiment from the top of the storage medium 1, penetrating first the cover layer 7. The first and second dielectric layers 5, 6 comprise for example the material $ZnS-SiO_2$. The substrate 2 and the cover layer 7 may consist of a plastic material, as known from DVDs and CDs. In other embodiments, the reflective metallic layer may be omitted, when a super-resolution near field structure is used, which does not provide an increase in transmittance due to a heating effect, but works with another nonlinear effect, for example utilizes an effect providing an increased reflectivity of the nonlinear layer 4 when irradiated with a laser beam. The layers of the storage medium 1 are arranged in particular as a layer stack.

With the super-resolution effect, the resolution of a pickup can be increased in track direction by a considerable amount, for example by a factor of two to four. This allows a reduction of the size of the marks and spaces of the tracks on the optical disc in track direction. But the super-resolution effect as such does not allow to reduce the track pitch below the diffraction limit of $\lambda/2*NA$ of a corresponding pickup for reading of the data. If a push-pull effect is used for the tracking regulation of the pickup, the reduction of the track pitch is limited by the fact that the first order refracted beams have to be collected by the objective lens of the pickup. Otherwise there is no push-pull signal, because this signal is generated by the interference of the $0^{th}$ order and the $1^{st}$ order beams as reflected from the optical storage medium. For a Blu-ray pickup, this occurs at a track pitch of about 280 nm. The standard track pitch of a Blu-ray disc is 320 nm.

To overcome this problem, the present invention uses an optical storage medium with marks and spaces arranged in tracks, the marks and spaces being generated in accordance with different modulation codes. A first modulation code provides for example essentially large marks and small spaces for a first track and a second modulation code generates essentially small marks and large spaces being arranged in a second neighboring track. The modulation code is therefore alternating between consecutive tracks from the first modulation code to the second modulation code. When the tracks are arranged as spirals on the optical storage medium, a first spiral comprises advantageously only marks and spaces in accordance with the first modulation code and a second spiral comprises only marks and spaces of the second modulation code.

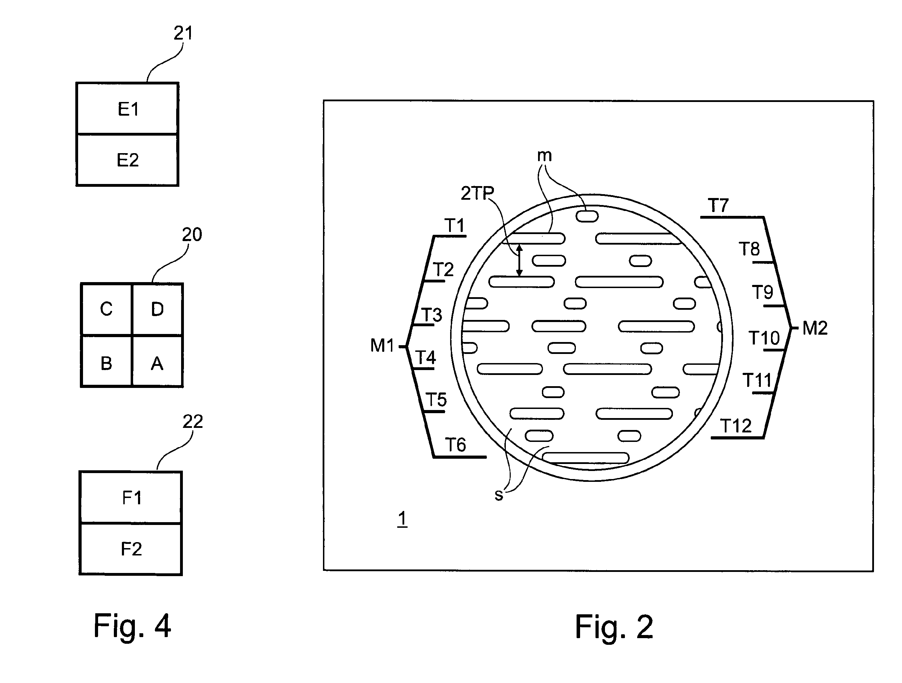

An embodiment of an optical storage medium comprising tracks having a mark/space data structure in accordance with a first modulation code M1 and tracks having a mark/space data structure in accordance with a second modulation code M2 is shown in Fig. 2. Fig. 2 shows only a small part of the optical storage medium 1 in magnification comprising tracks T1-T6 having essentially large marks m and small spaces s in accordance with the first modulation code M1 and tracks T7-T12 comprising essentially small marks m and large spaces s in accordance with the second modulation code M2. The tracks T1-T12 contain in particular user data, for example of a movie.

Between adjacent tracks, tracks T1, T2, tracks T2, T3, etc., the modulation code is always changing, so that tracks T7-T12 with the second modulation code M2 are interleaved in between the tracks T1-T6 of the first modulation code M1. Therefore, for consecutive tracks it is switched alternatively between the first and the second modulation code. If the track pitch between two adjacent tracks of different modulation code is defined as TP, then the track pitch between two tracks of same modulation code is correspondingly the distance 2TP.

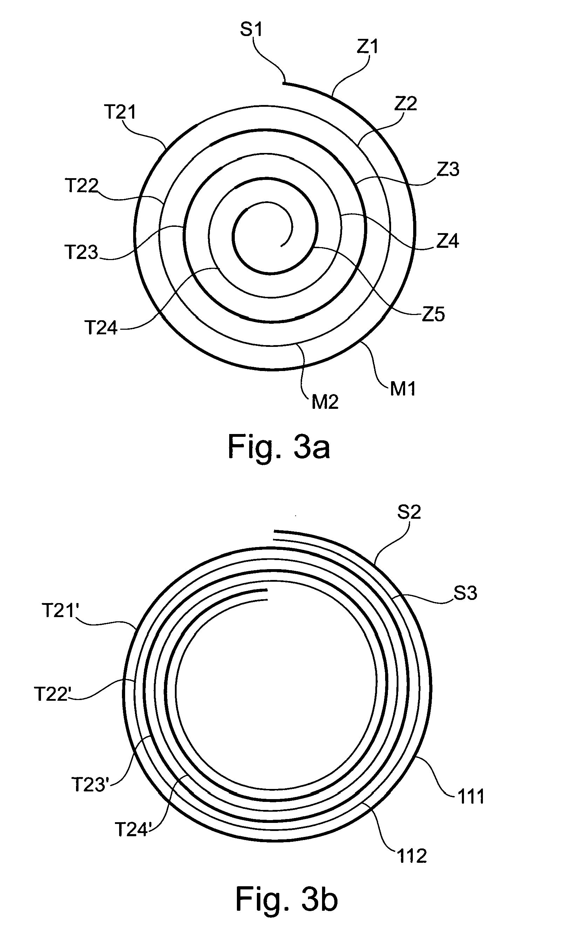

The tracks as shown in figure 2 may be arranged on an optical disc in form of spirals, as known from a DVD or a Blu-Ray disc, or in form of circular rings or segments of circular rings, as known from a DVD-RAM. In figure 3a an embodiment of a track structure is shown in a simplified manner, in which tracks T21 - T24, ... are represented by one spiral S1 on an optical disc. To provide the requirement, that the modulation code of marks for neighboring tracks T21, T23 changes with regard to the track T22, the modulation code of the marks as arranged in the spiral S1 has to change periodically between the first and second modulation codes M1 and M2. This can be made by partitioning the spiral S1 into sequences 21, Z3, Z5, ..., which have only marks of the first modulation code M1, indicated by fat line segments, and interleaved sequences Z2, Z4, ..., indicated by thin line segments, which contain only marks with the modulation code M2. When the length of each of the segments Z1 - Z5 has the length of one revolution respectively 360°, the requirement is fulfilled, that the modulation code of marks of a neighboring track is always different with regard to a specific track, as shown in figure 3a.

The length of the sequences Z1, Z2, ... can be alternatively also smaller, and in particular, if successive sequences have a length of $1/(1+2n)$ of a perimeter of 360°, it can be easily shown that the requirement is also fulfilled, that the modulation code of marks of one of the tracks is always different from the modulation code of marks of the adjacent tracks, when n = 1, 2, 3, ...,. But an optical disc with shorter sequences is more difficult to master, and therefore sequences Z1, Z2, ... having the length of the perimeter of 360° seem to be the optimum.

Another preferred embodiment of the optical storage medium 1 is shown in figure 3b in a simplified manner, in which tracks T21'-T24', etc. are arranged as two spirals S2, S3 on an optical disc. The first spiral S2 comprises marks and spaces according to the first modulation code M1 and the second spiral S3 comprises marks and spaces according to the second modulation code M2. The first spiral S2 is interleaved with the second spiral S3 such, that the tracks T21', T23' belong to the first spiral S2 and the tracks T22', T24' belong to the second spiral S3.

The optical storage medium 1 may be designed for example for operation with an apparatus comprising a pickup with a Blu-ray type optics providing a laser beam with a wavelength $\lambda$=405nm and having a numerical aperture NA=0,85. The track pitch TP of adjacent tracks of the storage medium 1 is for example 160 or 200nm, below the respective diffraction limit of $\lambda$/2*NA = 238nm for tracking regulation of the pickup. Because of the different modulation codes M1, M2, for the tracking regulation then only the periodic structure of tracks of the same modulation code is relevant, having the distance 2TP which is above the diffraction limit of $\lambda$/2*NA.

An apparatus for reading of data of an optical storage medium in accordance with Fig. 2 comprises a pickup with a laser, a detector unit, and an objective lens for reading data from the optical storage medium, a tracking regulation and a data processing unit for decoding data of the tracks T1-T12 in accordance with the first or the second modulation code M1, M2. The apparatus uses advantageously a three beam optical pickup, providing a center beam for reading of the data tracks and providing two satellite beams for utilizing a push-pull tracking method. For the satellite beams, a lower laser power can be selected with regard to the laser power of the center beam, because no super-resolution effect is required for generating the push-pull tracking signal. Therefore, a conventional differential push-pull grating can be used within the pickup to generate the three beams, wherein the satellite beams have a lower power than the center beam, and wherein the radial distance of the spots as provided on the optical disc is -TP between the first satellite beam and the center beam and +TP between the center beam and the second satellite beam.

A detector unit, which can be used advantageously for providing a push-pull tracking signal as described above, as well as for providing a data signal and a focus error signal, is shown in Fig. 4. The detector unit comprises a four-quadrant detector 20 with four segments A, B, C, D for detecting light from the center beam as reflected from the optical disc. A second detector 21 is provided for the reflected light from the first satellite beam and for reflected light from the second satellite beam a third detector 22, which are each split into two halves with regard to the radial direction of the optical disc. Detector 21 is split into two equal segments E1, E2 and detector 22 into two equal segments F1, F2, and the geometrical arrangement of the detectors 20-22 inside the pickup is made such that the reflected light from the main beam is centered on detector 20, reflected light from the first satellite beam centered on detector 21 and reflected light from the second satellite beam centered on detector 22.

The segments A-F2 are photosensitive elements as known from prior art. They provide corresponding electrical signals a1, b1, c1, d1, e1, e2, f1, f2, from which a three-beam push-pull tracking signal TE for correcting the tracking error of the pickup can be calculated according to the following formula:

$$TE = (d1 - a1) + (c1 - b1) + (e2 - e1) + (f2 - f1)$$

The difference signals (d1 - a1), (c1 - b1), (e2 - e1) and (f2 - f1) have to be added, because they provide signals of same polarity. The four segments A-D are further used to provide the HF data signal and the focus error signal for focus regulation. Alternatively, only the signals e1, e2, f1, f2 from the satellite beams may be used for providing a push-pull tracking signal. Also, a tracking regulation based on a push-pull tracking signal provided by the photosensitive elements A - D of the center beam may be used, because the center beam sees also a periodic track structure of 2TP in radial direction of the disc.

The optical storage medium 1 is in a preferred embodiment a read-only optical disc comprising pits and lands as marks and spaces, and the first modulation code M1 provides tracks being dominated by pits and the second modulation code M2 provides tracks being dominated by lands, or vice versa. The first modulation code M1 provides advantageously tracks having a pit/land percentage of > 70% representing groove-kind tracks and the second modulation code M2 provides advantageously tracks having a pit/land percentage of < 30% for providing land-kind tracks.

The tracking error signal TE is low-pass filtered for improved tracking regulation, also for removing noise, and the remaining signal is therefore averaging the pit and land geometry of a track, along which the spots of the two satellite beams are passing over. Because of the low-pass filtering, the groove-kind tracks will be seen as a continuous groove having a depth of > 70% of the pits, and the land-kind tracks will be seen as grooves having a depth of < 30% of the depth of the pits. The HF data signal is not low-pass filtered and is of course sensitive to the depth of the single pits. When the center beam is on a land-kind track, then the first satellite beam is adjusted to the adjacent left groove-kind track and the second satellite beam is adjusted to the adjacent right groove-kind track, and when the center beam is on a groove-kind track, then the two satellite beams are adjusted correspondingly to the adjacent land-kind tracks.

For example, if the first modulation code M1 provides a pit and land distribution with a fraction of 75% of a track represented by pits and 25% represented by lands, then the tracking regulation sees the groove-kind tracks as continuous grooves with an average pit depth of 75% of the depth of a single pit. The second modulation code M2 provides a corresponding pit and land data structure for the adjacent tracks with a fraction of 75% lands and 25% pits, which tracks will be seen by the tracking regulation as grooves with an average pit depth of 25% of a single pit depth. If the pit depth is 60nm, this leads to groove-kind tracks with an average pit depth of 45nm and land-kind tracks with an average pit depth of 15nm. The average pit depth of the tracks in accordance with the modulation codes M1 and M2 can be preferably chosen therefore in order to optimize the tracking error signal TE and to establish a stable radial position of the center beam on a respective track for reading of the data.

In another embodiment, a groove-kind track will be provided by using a first modulation code M1 generating only spaces of 2T and 3T length and only pits of 4T to 9T length, T being the channel bit length. The land-kind track will be provided by a modulation code M2 generating only pits of 2T and 3T length and only lands of 4T to 9T length. The two modulation codes are advantageously symmetric to each other so that only one modulation code has to be developed. The second modulation code corresponds to the first by just switching the sign or polarity for providing respective pits and lands instead of lands and pits. The hardware requirements for the data processing unit can be simplified accordingly.

Modulation codes fulfilling these criteria may have a slightly reduced data density because less symbols are used for storing of the digital data, but an efficient modulation code can be provided for example by using a table, which maps the data bits of user data to the 2T and 3T pits and 4T to 9T lands in accordance with the first modulation code and correspondingly to the 2T and 3T lands and 4T to 9T pits in accordance with the second modulation code. Also, a kind of correction symbols may be used in the code in order to generate the desired offsets for the land kind track and for the groove kind track. A similar mechanism is already used in current modulation codes for optical discs, for example for providing a DC free modulation code as used for the Blu-ray disc, by using DC control pits.

The different modulation codes M1, M2 lead to tracking signals with different average amplitudes, for example to a tracking signal with a low amplitude for the tracks with large pits and small lands, and to a tracking signal with a higher amplitude for the tracks with small pits and large lands. The reflected light from a land is for example higher than the reflected light coming from a pit of a corresponding track. Then, the tracking signal corresponds to a high reflective signal, when the satellite beams move along a land-kind track, and corresponds to a low reflective signal, when the two satellite beams move along groove-kind tracks.

A tracking regulation can select therefore tracks with the first modulation code M1 with regard to a first average amplitude of the tracking signal and tracks of the second modulation code M2 with regard to a second average amplitude of the tracking signal. The main beam of the pickup can be switched therefore easily from a track having marks and spaces in accordance with the first modulation code to a track with marks and spaces of the second modulation code by selecting a respective amplitude of the tracking signal.

An example for two symmetrical modulation codes M1, M2 is shown in Fig. 5 for two adjacent tracks Tn, T(n+1). Track Tn includes a data sequence of short 2T and 3T pits and lands of length 4T or longer. Track T(n+1) includes a data sequence of short 2T and 3T lands and pits of length 4T or longer. The modulation code M1 of track Tn is symmetric to modulation code M2 of track T(n+1) because the pits and lands of track T(n+1) can be generated from pits and lands of track Tn by replacing the pits of track Tn by lands of respective length and the lands of track Tn by pits of respective length.

A stamper can be mastered for a ROM disc of this kind comprising a first spiral S1 in accordance with the first modulation code M1 and a second spiral S2 in accordance with the second modulation code M2, by using two mastering beams, which are separated in radial direction by the track pitch TP, one mastering beam providing the data for the first spiral S1 and the other mastering beam providing the data for the second spiral S2. The two mastering beams generate tracks, each having pits with the same width and same depth. The radial feed for one disc revolution is 2TP, to obtain a track pitch of TP for all tracks of the two spirals S1, S2.

A super-resolution ROM disc corresponding with the embodiment as described with regard to Fig. 1 is operated advantageously with a Blu-ray type pickup. The distance 2TP between two tracks with the same modulation code is adjusted for example to 320nm, which leads to a track pitch TP of 160nm between two adjacent tracks, being below the diffraction limit of the Blu-ray type pickup of $\lambda/2*NA$. The data density in radial direction can be increased therefore with this embodiment by a factor of two with regard to the standard Blu-ray disc format. For reading of the data of the ROM disc, the Blu-ray type pickup provides a main beam having an intensity being sufficient for utilizing a super-resolution effect, and providing two satellite beams for the tracking regulation, which have an intensity being below the threshold for providing the super-resolution effect. The two satellite beams then see in this case only land-kind tracks with essentially no pits, when they are adjusted on tracks comprising only pits having a length being below the optical resolution limit.

For example, for the super-resolution ROM disc a standard RLL (1,7) modulation code is used to provide the groove-kind track, and a modulation code allowing only small pits, but including large spaces, to generate the land-kind track. The pit lengths will be chosen equal or below 120nm which is the diffraction limit of the Blu-ray type pickup. Taking a 2T length of 60nm, the groove-kind track will be generated by pits and lands using 2T=60nm; 3T=90nm; 4T=120nm; 5T=150nm ... 9T=270nm lengths. The land-kind tracks will be generated by using pits at 2T=60nm; 3T=90nm and 4T=120nm only. The spaces of the land-kind tracks will have any length, from 5T=150nm to 9T=270nm.

In this example there is no loss in data density along the groove-kind tracks because the standard RLL (1,7) modulation code is used. Then, the encoded data in the land-kind track increase the capacity in comparison to a standard Super-RENS ROM disc without reduced track pitch.

This is an example for a disc with an asymmetric modulation code providing different data densities for the land-kind and groove-kind tracks. Preferably, such a disc will be read from inside to outer radius following the groove-kind track spiral, and then back to the inner radius and following the land-kind spiral. This will simplify the reading of the data, and different speed values may be used for the two spirals, in order to read the disc with a constant data rate.

In a further embodiment, an optical disc comprises a first track, which has marks being extended in length and spaces shortened in length with regard to a standard modulation code, and for an adjacent track, the marks are shortened in length and spaces extended in length. The marks are extended for example by 15%-20% and the spaces shortened by 15%-20% for the first track and correspondingly, the marks are shortened by 15%-20% and the spaces extended by 15%-20% for the adjacent track, with regard to marks and spaces of the 1.7 PP channel modulation code of a Blue-ray disc. In this case, the modulation code is therefore also changing between a first modulation code and a second modulation code for adjacent tracks, for providing tracks having alternatingly a land-kind track and a groove-kind track, as explained with regard to figure 2.

The track structure of the invention as explained with regard to Fig. 2 can be applied in particular to a Super-RENS ROM disc, comprising a mask layer with a super resolution structure. The track pitch is advantageously below 200 nm for use with an optical pickup having a semiconductor laser emitting light with a wavelength of e.g. about 405 nm. But also other embodiments may be utilized by a person skilled in the art without departing from the spirit and scope of the present invention. The track structure of the invention may be applied for example also to other optical discs not including a nonlinear layer, for a reduction of the track pitch, and the invention may be used also for writable and re-writable optical storage media. The invention resides therefore in the claims herein after appended.

### Claims

1. Optical storage medium (1) comprising a substrate layer (2) and a data layer (3) disposed on the substrate layer (2), the data layer (3) having a mark/space data structure being arranged in tracks (T1-T12), **characterized in that** marks and spaces of a first track (T1-T6) are provided in accordance with a first modulation code (M1) and marks and spaces of a neighboring track (T7-T12) are provided in accordance with a second modulation code (M2) being different from the first modulation code (M1).

2. The optical storage medium of claim 1, **wherein** the modulation code of marks and spaces of adjacent tracks is alternating between the first and the second modulation code (M1, M2).

3. The optical storage medium of claim 1 or 2, **wherein** the two modulation codes (M1, M2) are symmetric to each other.

4. The optical storage medium of claim 1, 2 or 3, **wherein** the first modulation code (M1) provides a mark-kind track (T1-T6) having marks (m) representing a mark percentage of >60% and the second modulation code (M2) provides a land-kind track (T7-T12) having spaces (s) representing a land percentage of >60%.

5. The optical storage medium of one of the preceding claims, **wherein** the optical storage medium is a read-only optical disc comprising pits and lands as the marks and spaces and wherein the first modulation code (M1) provides a groove-kind track having pits representing a pit/land percentage of > 70 % and the second modulation code (M2) provides a land-kind track having lands representing a pit/land percentage of < 30%.

6. The optical storage medium according to one of the preceding claims, **wherein** the smallest distance between tracks of same modulation code is twice the track pitch (TP) between consecutive tracks.

7. The optical storage medium of one of the preceding claims, **comprising** further a mask layer with a super resolution structure (4) being arranged between the data layer (3) and a cover layer (7), and wherein the track pitch (TP) between consecutive tracks (T1, T2) is below the diffraction limit of $\lambda/2*NA$ of a corresponding pickup for reading of the data, particularly below 220 nm for use with a pickup having a laser emitting light with a wavelength within a range of 400-430 nm.

8. The optical storage medium according to one of the preceding claims, **wherein** for the first track, the marks are extended in length and spaces shortened in length with regard to a standard modulation code, and for a neighboring track, the marks are shortened in length and spaces extended in length, for providing tracks having alternatingly a land-kind track and a groove-kind track.

9. Apparatus comprising a pickup with a laser, a detector unit (20-22) and an objective lens for reading data from an optical storage medium in accordance with one of the preceding claims, and comprising a data processing unit for decoding data of a track (T1-T12) in accordance with the first or the second modulation code (M1, M2).

10. The apparatus of claim 9, **wherein** the pickup provides a center beam and two satellite beams for reading of the data and for providing a tracking signal, the three beams being focused by the objective lens onto the optical storage medium, and reflected light from the optical storage medium being guided onto the detector unit (20-22).

11. The apparatus of claim 10, **wherein** the intensity of the two satellite beams is each smaller than 50% of the intensity of the main beam.

12. The apparatus of claim 10 or 11, **wherein** the detector unit comprises a center detector (20) for detecting reflected light from the center beam and two satellite detectors (21, 22) for detecting reflected light from the satellite beams, the two satellite detectors (21, 22) being divided each into two segments (E1, E2, F1, F2), and the pickup providing a push-pull tracking signal for tracking regulation in response to the two satellite detectors (21, 22), or wherein the detector unit comprises a center detector (20) for detecting reflected light from the center beam and the pickup providing a push-pull tracking signal for tracking regulation in response to the center detector (20).

13. The apparatus of claim 12, **wherein** the tracking signal (TE) is calculated by taking into account the relation TE = (e1-e2) + (f1-f2), e1, e2, f1, f2 being electrical signals from the four segments (E1, E2, F1, F2) of the two satellite detectors (21, 22).

14. The apparatus of one of the claims 9-13, **comprising** a tracking regulation, which selects tracks of the first modulation code (M1) in response to a first average amplitude of the tracking signal and tracks of the second modulation code (M2) in response to a second average amplitude of the tracking signal.

15. The optical storage medium according to one of the claims 5 - 8, **wherein** the tracks (T21-T24) are arranged as a single spiral (S1) on the optical disc, and wherein the modulation code of the marks changes after one revolution, or after 1/(1+2n) of a revolution with n=1, 2, 3, ..., between the first and the second modulation code (**M1, M2**), or wherein the tracks (T21'-T24') are arranged on the optical disc as two spirals, a first spiral (S2) comprising only marks of the first modulation code (**M1**) and the second spiral (S3) comprising only marks of the second modulation code (**M2**).

Laser beam

| Cover Layer |
| Data Layer |
| Substrate |

Fig. 1

Fig. 5

S1    Z1

T21    Z2

T22    Z3

T23    Z4

T24    Z5

M2    M1

## Fig. 3a

S2

S3

T21'

T22'

T23'    111

T24'    112

## Fig. 3b

Fig. 2

Fig. 4

Europäisches
Patentamt

European
Patent Office

Office européen
des brevets

# EUROPEAN SEARCH REPORT

Application Number

EP 09 30 5364

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/046777 A1 (THOMSON LICENSING [FR]; KNITTEL JOACHIM [DE]; KNAPPMANN STEPHAN [DE]) 24 April 2008 (2008-04-24) | 1-7,9-10 | INV.<br>G11B7/007<br>G11B7/013 |
| Y | * the whole document * | 11-15 | |
| X | EP 1 372 143 A2 (KONINKL PHILIPS ELECTRONICS NV [NL]) 17 December 2003 (2003-12-17) | 1-3,6, 9-10 | |
| Y | * paragraph [0010] - paragraph [0024]; figures 1,3e,4,5 * | 11-14 | |
| Y | EP 2 009 626 A1 (THOMSON OHG DEUTSCHE [DE]) 31 December 2008 (2008-12-31) | 11-14 | |
| A | * the whole document * | 1-10,15 | |
| X | EP 1 968 048 A1 (THOMSON OHG DEUTSCHE [DE]) 10 September 2008 (2008-09-10) | 1-2,6-7, 9-10 | |
| Y | * the whole document * | 15 | |
| X | US 2007/008840 A1 (MARTENS HUBERT F C [NL] ET AL) 11 January 2007 (2007-01-11) * paragraph [0008] - paragraph [0057]; figures 1a-1e,11 * | 1-2,4-5, 9-10 | TECHNICAL FIELDS SEARCHED (IPC)<br><br>G11B |
| A | EP 2 040 255 A2 (HITACHI LTD [JP]) 25 March 2009 (2009-03-25) * paragraph [0007] - paragraph [0014] * | 1-15 | |

The present search report has been drawn up for all claims

| Place of search | Date of completion of the search | Examiner |
|---|---|---|
| Munich | 20 October 2009 | Moje, Andreas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**                EP 09 30 5364

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-2009

| Patent document cited in search report | | Publication date | Patent family member(s) | | Publication date |
|---|---|---|---|---|---|
| WO 2008046777 | A1 | 24-04-2008 | EP<br>KR | 2074617 A1<br>20090064399 A | 01-07-2009<br>18-06-2009 |
| EP 1372143 | A2 | 17-12-2003 | EP | 1066627 A1 | 10-01-2001 |
| EP 2009626 | A1 | 31-12-2008 | CN<br>EP<br>JP<br>KR<br>US | 101335025 A<br>2009627 A1<br>2009016029 A<br>20090004534 A<br>2009003147 A1 | 31-12-2008<br>31-12-2008<br>22-01-2009<br>12-01-2009<br>01-01-2009 |
| EP 1968048 | A1 | 10-09-2008 | CN<br>EP<br>JP<br>US | 101295517 A<br>1968050 A2<br>2008226436 A<br>2009028040 A1 | 29-10-2008<br>10-09-2008<br>25-09-2008<br>29-01-2009 |
| US 2007008840 | A1 | 11-01-2007 | BR<br>CA<br>CN<br>WO<br>JP<br>KR<br>MX | PI0415078 A<br>2541784 A1<br>1864209 A<br>2005036535 A2<br>2007508645 T<br>20060133968 A<br>PA06003874 A | 12-12-2006<br>21-04-2005<br>15-11-2006<br>21-04-2005<br>05-04-2007<br>27-12-2006<br>03-07-2006 |
| EP 2040255 | A2 | 25-03-2009 | CN<br>JP<br>US | 101393755 A<br>2009076134 A<br>2009080311 A1 | 25-03-2009<br>09-04-2009<br>26-03-2009 |